# EUROPÄISCHE PATENTSCHRIFT

(11) **EP 3 392 120 B1**
(45) Veröffentlichungstag und Bekanntmachung des Hinweises auf die Patenterteilung: **11.03.2020**
(21) Anmeldenummer: 18165432.8
(22) Anmeldetag: 03.04.2018
(51) Int. Cl.: B62D 5/00, B62D 6/00

(54) **STEER-BY-WIRE-LENKUNG UND VERFAHREN ZUR EINSTELLUNG EINES LENKWINKELS BEI EINER STEER-BY-WIRE-LENKUNG**
STEER-BY-WIRE STEERING SYSTEM AND METHOD FOR ADJUSTING A STEERING ANGLE WITH A STEER-BY-WIRE SYSTEM
DIRECTION PAR ORIENTATION PAR CÂBLES ET PROCÉDÉ DE RÉGLAGE D'UN ANGLE DE DIRECTION DANS UNE DIRECTION PAR ORIENTATION PAR CÂBLES

(30) Priorität: 19.04.2017 DE 102017206610
(43) Veröffentlichungstag der Anmeldung: 24.10.2018
(73) Patentinhaber: VOLKSWAGEN AKTIENGESELLSCHAFT, 38440 Wolfsburg (DE)
(72) Erfinder: Kilz, Sebastian, 29225 Celle (DE); Makkus, Björn, 38108 Braunschweig (DE); Schäfer, Johannes Maria, 39615 Werben OT Berge (DE)

(56) Entgegenhaltungen:
- EP-A2- 1 407 959
- EP-A2- 1 621 448
- DE-A1- 10 305 132

## Beschreibung

Die Erfindung betrifft eine Steer-by-wire-Lenkung nach dem Oberbegriff des Anspruchs 1 und ein Verfahren zur Einstellung eines Lenkwinkels bei einer Steer-by-wire-Lenkung nach dem Oberbegriff des Anspruchs 5.

Steer-by-wire-Lenkungen weisen üblicherweise eine Lenkhandhabe, einen Drehwinkelsensor zur Erfassung einer Stellung der Lenkhandhabe, einen Lenkaktor zur Einstellung eines Lenkwinkels in Abhängigkeit der Daten des Drehwinkelsensors an einem Stellglied und das Stellglied auf. Aktor und Lenkaktor sind typischerweise als Elektromotoren ausgebildet. Die Lenkhandhabe ist beispielsweise ein Lenkrad und das Stellglied eine Zahnstange. Dabei weist das Stellglied einen mechanischen Endanschlag auf. Der Aktor erzeugt an der Lenkhandhabe einen Software-Endausschlag, indem dieser ein Gegenmoment erzeugt, das von einem Fahrer typischerweise nicht mehr überlenkt werden kann.

Weiter ist ein Übersetzungsverhältnis zwischen Drehwinkel an der Lenkhandhabe und Lenkwinkel eingestellt, wobei das Übersetzungsverhältnis von Parametern wie beispielsweise der Fahrzeuggeschwindigkeit oder einem Fahrerassistenzsystem (z.B. Einparkhilfe) abhängig sein kann. Vorzugsweise korrespondiert dabei die Position des Software-Endausschlages mit der Position des mechanischen Endanschlages.

Aus verschiedenen Gründen kann es nun dazu kommen, dass der Fahrer über den Software-Endausschlag hinaus lenkt, beispielsweise weil dieser entsprechend große Handmomente aufbringt oder aber weil der Aktor keine oder nicht ausreichend große Gegenmomente erzeugen kann. Dies führt dann dazu, dass die Stellung des Drehwinkelsensors nicht mehr zur Stellung des Stellgliedes korrespondiert. Im Extremfall können dies ein oder mehrere Umdrehungen des Lenkrades sein. In dieser Situation stellt sich dann die Frage, wie die Steer-by-wire-Lenkung reagieren soll, wenn in die Gegenrichtung (also in Richtung einer Neutralstellung) zurückgelenkt wird. Theoretisch wäre es denkbar, dass die Lenkung erst ab Erreichen des dem Software-Endanschlag zugeordneten Drehwinkels reagiert und ab da dann die Stellsignale vom Lenkaktor mit dem eingestellten Übersetzungsverhältnis umgesetzt werden. Dies hätte dann aber zur Folge, dass der Fahrer gegebenenfalls ganze Lenkraddrehungen durchführt, ohne dass die Lenkung reagiert.

Zur Lösung dieses Problems sieht die EP 1 426 267 A2 vor, dass das Übersetzungsverhältnis angepasst wird. Dabei wird das Übersetzungsverhältnis erniedrigt, und zwar so, dass eine Neutralstellung des Lenkrades wieder mit einer Neutralstellung (Geradeausstellung) der Lenkung korrespondiert.

Aus der DE 103 05 132 A1 ist eine Steer-by-wire-Lenkung bekannt, umfassend eine Lenkhandhabe, einen Drehwinkelsensor zur Erfassung einer Stellung der Lenkhandhabe, einen Aktor zur Erzeugung eines Gegenmoments an der Lenkhandhabe, einen Lenkaktor zur Einstellung eines Lenkwinkels in Abhängigkeit der Daten des Drehwinkelsensors an einem Stellglied, wobei dann das Stellglied einen mechanischen Lenkanschlag aufweist und der Aktor an der Lenkhandhabe einen Software-Endanschlag aufweist. Dabei ist zwischen dem Drehwinkel an der Lenkhandhabe und Lenkwinkel ein Übersetzungsverhältnis eingestellt, wobei die Steer-by-wire-Lenkung derart ausgebildet ist, dass bei einer Überdrehung der Lenkhandhabe über den dem Software-Endanschlag zugeordneten Drehwinkel bei einer Richtungsumkehr des Drehwinkels ein angepasstes Übersetzungsverhältnis eingestellt wird, wobei das angepasste Übersetzungsverhältnis derart gewählt wird, dass eine verbleibende Fehlstellung der Lenkhandhabe minimiert wird.

Aus der EP 1 621 448 A2 ist eine Steer-by-wire-Lenkung bekannt, bei der im Falle eines Überdrehens der Lenkhandhabe das Übersetzungsverhältnis unverändert bleibt, sodass die Lenkhandhabe in einer Fehlstellung verbleibt.

Der Erfindung liegt das technische Problem zugrunde, eine Steer-by-wire-Lenkung zu schaffen, bei der das Lenkgefühl im Falle eines Überdrehung der Lenkhandhabe über eine Software-Endanschlagsstellung verbessert ist. Ein weiteres technisches Problem ist das Zurverfügungstellen eines Verfahrens zur Einstellung eines Lenkwinkels bei einer Steer-by-wire-Lenkung in einer solchen Situation.

Die Lösung des technischen Problems ergibt sich durch eine Steer-by-wire-Lenkung mit den Merkmalen des Anspruchs 1 sowie ein Verfahren mit den Merkmalen des Anspruchs 5. Weitere vorteilhafte Ausgestaltungen der Erfindung ergeben sich aus den Unteransprüchen.

Hierzu umfasst die Steer-by-wire-Lenkung eine Lenkhandhabe, einen Drehwinkelsensor zur Erfassung einer Stellung der Lenkhandhabe, einen Aktor zur Erzeugung eines Gegenmoments an der Lenkhandhabe, einen Lenkaktor zur Einstellung eines Lenkwinkels in Abhängigkeit der Daten des Drehwinkelsensors an einem Stellglied und das Stellglied. Dabei weist das Stellglied einen mechanischen Endanschlag auf und der Aktor realisiert an der Lenkhandhabe einen Software-Endanschlag, wobei zwischen Drehwinkel an der Lenkhandhabe und Lenkwinkel ein Übersetzungsverhältnis eingestellt ist. Zu dem eingestellten Übersetzungsverhältnis sind ein positiver Deltawert und ein negativer Deltawert definiert. Dabei ist die Steer-by-wire-Lenkung derart ausgebildet, dass bei einer Überdrehung der Lenkhandhabe über den dem Software-Endanschlag zugeordneten Drehwinkel bei einer Richtungsumkehr des Drehwinkels ein Übersetzungsverhältnis eingestellt wird, das durch den positiven Deltawert und den negativen Deltawert begrenzt ist, wobei das Übersetzungsverhältnis derart gewählt wird, dass eine verbleibende Fehlstellung der Lenkhandhabe minimiert wird. Der Grundgedanke der Erfindung ist dabei, dass es nicht primäres Ziel ist, dass Neutralstellung der Lenkhandhabe und Neutral- bzw. Geradeausstellung der Lenkung in Übereinstimmung gebracht werden, sondern dass dem Fahrer ein gewohntes und erwartetes Übersetzungsverhältnis der Lenkung zur Verfügung gestellt wird, wobei eine gegebenenfalls verbleibende Fehlstellung der Lenkhandhabe in Kauf genommen wird. Die Deltawerte sind dabei derart gewählt, dass der Fahrer die Abweichungen zum Übersetzungsverhältnis nicht bzw. als nicht unangenehm wahrnimmt. Beispielsweise können die Deltawerte vorab bei Fahrversuchen mit einer ausreichend großen Gruppe von Testpersonen ermittelt werden. Somit spricht die Lenkung bei einer Richtungsumkehr sofort mit dem gewohnten Übersetzungsverhältnis an.

In einer Ausführungsform sind der positive Deltawert und der negative Deltawert betragsmäßig gleich groß, wodurch die Fehlstellungen symmetrisch kompensiert werden können.

Allerdings können die Deltawerte auch betragsmäßig unterschiedlich sein, beispielsweise weil die Wahrnehmbarkeit von erhöhtem bzw. reduziertem Übersetzungsverhältnis unterschiedlich ist.

In einer weiteren Ausführungsform werden ganzzahlige Vielfach um 360° oder eines anderen Symmetriewinkels der Lenkhandhabe eines über den dem Software-Endanschlag zugeordneten Drehwinkels eingeschlagenen Drehwinkels ignoriert. Hierdurch wird die zu korrigierende Anpassung des Übersetzungsverhältnisses minimiert. Wird also z. B. 370° über den Software-Endanschlag überdreht, so werden nur die 10° korrigiert (entsprechend bei 730° auch nur 10°). Ist die Lenkhandhabe halbsymmetrisch (z.B. die Lenkhandhabe weist nur eine Querspeiche auf, deren horizontale Stellung der Neutralstellung entspricht), so ist der Symmetriewinkel 180°.

Um nun die gegebenenfalls verbleibende Fehlstellung zu korrigieren, kann es vorgesehen sein, dass das Verfahren beim nächsten Lenkeinschlag wiederholt wird, wobei die Anpassung des Übersetzungsverhältnisses in Vorwärtsrichtung und/oder bei der Richtungsumkehr erfolgen kann.

Die Erfindung wird nachfolgend anhand eines bevorzugten Ausführungsbeispiels näher erläutert. Die Figuren zeigen:
- Fig. 1: ein schematisches Blockschaltbild einer Steer-by-wire-Lenkung,
- Fig. 2: einen schematischen Verlauf eines Gegenmoments an der Lenkhandhabe über dem Drehwinkel und
- Fig. 3: einen schematischen Verlauf des Lenkwinkels über dem Drehwinkel.

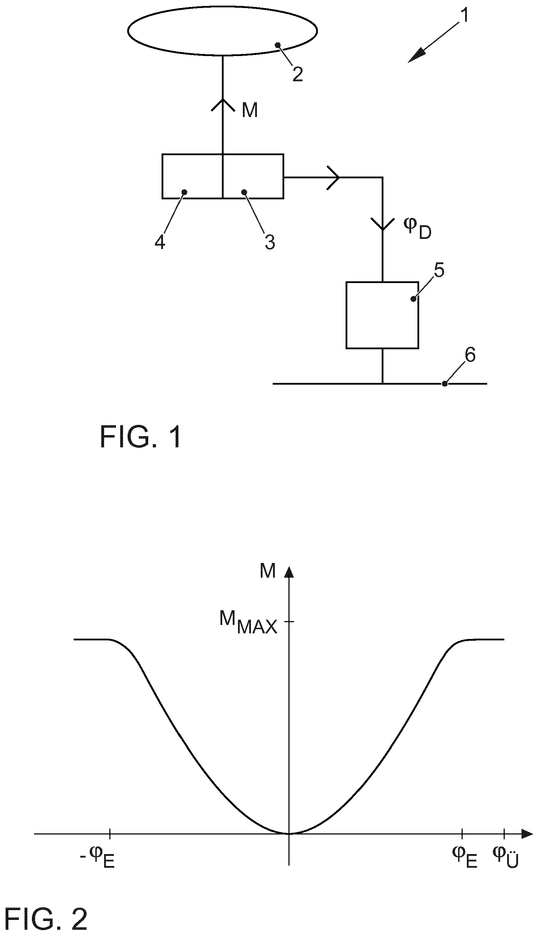

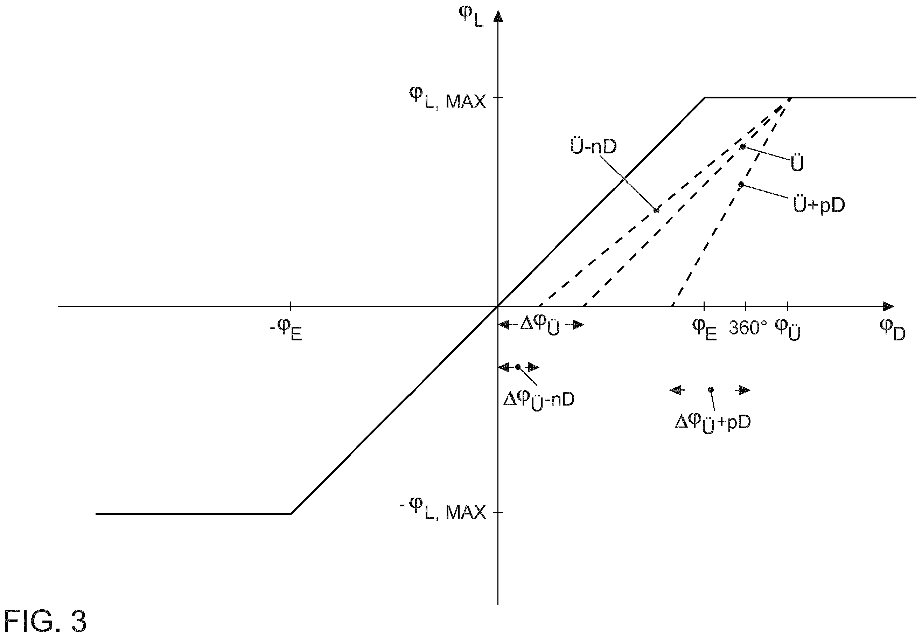

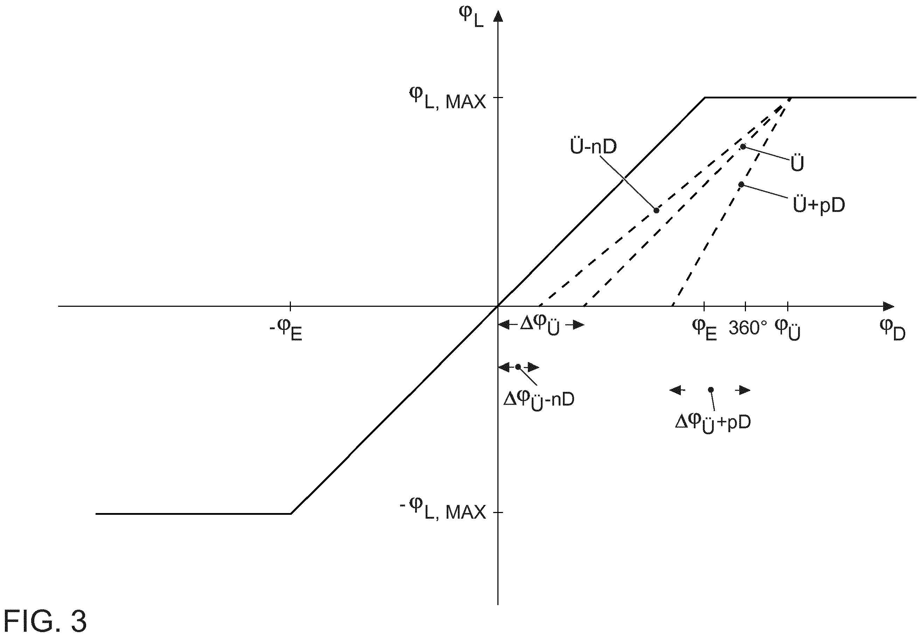

In der Fig. 1 ist schematisch eine Steer-by-wire-Lenkung 1 dargestellt, die eine Lenkhandhabe 2, einen Drehwinkelsensor 3 zur Erfassung einer Stellung ϕ_{D} der Lenkhandhabe 2, einen Aktor 4 zur Erzeugung eines Gegenmoments M an der Lenkhandhabe 2, einen Lenkaktor 5 zur Einstellung eines Lenkwinkels ϕ_{L} in Abhängigkeit der Daten ϕ_{D} des Drehwinkelsensors 3 an einem Stellglied 6. Der Lenkaktor 5 ist beispielsweise ein Elektromotor mit einem Steuergerät, das datentechnisch mit dem Drehwinkelsensor 3 verbunden ist. In dem Steuergerät ist ein Übersetzungsverhältnis Ü zwischen dem Drehwinkel ϕ_{D} und dem Lenkwinkel ϕ_{L} abgelegt. Weiter sind ein positiver Deltawert pD und ein negativer Deltawert -nD für das Übersetzungsverhältnis Ü im Steuergerät abgelegt, die später noch näher erläutert werden. Das Stellglied 6 ist beispielsweise eine Zahnstange, die beispielsweise über ein Kugelkopfgetriebe mit einer Welle des Elektromotors gekoppelt ist. Das Steuergerät 6 stellt dann den Lenkwinkel ϕ_{L} an nicht dargestellten lenkbaren Fahrzeugrädern ein. Dabei weist das Stellglied 6 einen mechanischen Endanschlag auf, an dem je nach Lenkrichtung ein maximaler Lenkwinkel ±ϕ_{L,MAX} einstellbar ist (siehe auch Fig. 3).

In der Fig. 2 ist nun das vom Aktor 4 erzeugte Gegenmoment M über dem Drehwinkel ϕ_{D} dargestellt, wobei bei einem Drehwinkel ±ϕ_{E} ein maximales Gegenmoment M_{MAX} erzeugt wird, um einen Software-Endanschlag zu realisieren.

In Fig. 3 ist schließlich der Lenkwinkel ϕ_{L} über dem Drehwinkel ϕ_{D} dargestellt, wobei die Steigung das Übersetzungsverhältnis Ü darstellt. Kommt es nun zu einem Ausfall oder Fehler des Aktors 4, sodass dieser kein Gegenmoment M erzeugen kann, so kann der Fahrer ohne Widerstand die Lenkhandhabe 2 drehen und beispielsweise einen Drehwinkel ϕ_{Ü} einstellen. In diesem Fall folgt der Lenkwinkel ϕ_{L} bei der Drehung bis zum Erreichen von ϕ_{D}=ϕ_{E} (mechanischer Endanschlag des Stellgliedes), wobei die weiteren Drehwinkeländerungen bis ϕ_{Ü} keinen Einfluss mehr auf den Lenkwinkel ϕ_{L} haben. Dreht dann der Fahrer die Lenkhandhabe 2 wieder zurück, reagiert die Lenkung sofort, d.h. der Lenkaktor 5 steuert das Stellglied 6 an, wobei das Übersetzungsverhältnis Ü im Bereich Ü-nD bis Ü+pD gewählt werden kann, wobei gegebenenfalls eine Fehlstellung Δϕ verbleibt (siehe Fig. 3). Dabei ist in Fig. 3 Δϕ dargestellt, wenn mit dem Übersetzungsverhältnis Ü die Richtungsumkehr erfolgt.

Zur Erläuterung des Verfahrens sollen nun ein paar Annahmen gemacht werden. Dabei sei -nD=pD. Weiter sei angenommen, dass die Lenkhandhabe 2 derart ausgebildet ist, dass optisch eine bestimmte Position der Neutralstellung zugeordnet ist. Weist beispielsweise die Lenkhandhabe 2 eine Speiche mit einem Hersteller-Logo auf, so ist optisch das waagerechte Logo die Neutralstellung. Der Drehwinkel ϕ_{Ü} bzw. die Differenz ϕ_{Ü}-ϕ_{E} kann beliebig groß sein und insbesondere größer als 360° sein. Ist die Differenz 360° und wird mit dem gleichen Übersetzungsverhältnis Ü zurückgedreht, so stellt sich ein Δϕ von 360° ein, was für den Fahrer aber optisch nicht erkennbar ist. Die wahrnehmbare Fehlstellung der Lenkhandhabe 2 ist also null. Daher können also Abweichungen von ganzzahligen Vielfachen von 360° unberücksichtigt gelassen werden.

Die wahrnehmbare Fehlstellung der Lenkhandhabe 2 kann also nur bei >0 und <360° liegen. Durch eine Vergrößerung des Übersetzungsverhältnisses Ü+pD wird weniger Drehwinkel ϕ und bei einer Verkleinerung des Übersetzungsverhältnisses Ü-nD wird mehr Drehwinkel ϕ für den gleichen Lenkwinkel ϕ_{L} benötigt. Weiter sei angenommen, dass die verbleibende Fehlstellung oder Lenkhandhabe sowohl positiv wie auch negativ sein kann, also in der Neutralstellung der Lenkung (Geradeausfahrt, ϕ_{L}=0) die Lenkhandhabe nach links oder rechts eingeschlagen ist. Weiter sei angenommen, dass beispielsweise mittels -nD +100° Drehwinkel und mit pD -100° Drehwinkel kompensiert werden können. Aufgrund der angenommenen Symmetrie ist dann bei Δϕ=180° der worst case.

Bei den angenommenen Zahlenwerten können dann Δϕ-Werte zwischen >0 und 100° vollständig durch ein angepasstes Übersetzungsverhältnis zwischen Ü und Ü-nD kompensiert werden. Ebenso können Δϕ-Werte zwischen <360° bis 260° durch ein angepasstes Übersetzungsverhältnis Ü+pD kompensiert werden, wobei für Δϕ zwischen 100° bis 260° eine Fehlstellung verbleibt.

Dies kann man sich grafisch wie folgt erklären. Ist Δϕ mit dem Übersetzungsverhältnis Ü kleiner 180°, so wird eine flachere Gerade gewählt, sodass der Schnittpunkt der x-Achse in Richtung Koordinatenursprung geschoben wird. Ist hingegen Δϕ größer 180°, so wird eine steilere Gerade gewählt, sodass der Schnittpunkt mit der x-Achse in Richtung ϕ_{D}=360° verschoben wird. Die optische wahrnehmbare Fehlstellung wird so reduziert, wobei das Lenkverhältnis sich nicht störend verändert.

## Patentansprüche

1. Steer-by-wire-Lenkung (1), umfassend eine Lenkhandhabe (2), einen Drehwinkelsensor (3) zur Erfassung einer Stellung der Lenkhandhabe (2), einen Aktor (4) zur Erzeugung eines Gegenmoments (M) an der Lenkhandhabe (2), einen Lenkaktor (5) zur Einstellung eines Lenkwinkels (ϕL) in Abhängigkeit der Daten (ϕD) des Drehwinkelsensors (3) an einem Stellglied (6), wobei dann das Stellglied (6) einen mechanischen Endanschlag aufweist und der Aktor (4) an der Lenkhandhabe (2) einen Software-Endanschlag realisiert, wobei zwischen Drehwinkel (ϕD) an der Lenkhandhabe (2) und Lenkwinkel (ϕL) ein Übersetzungsverhältnis (Ü) eingestellt ist,
**dadurch gekennzeichnet, dass**
zu dem eingestellten Übersetzungsverhältnis (Ü) ein positiver Deltawert (pD) ungleich null und ein negativer Deltawert (-nD) ungleich null definiert sind, wobei die Steer-by-wire-Lenkung (1) derart ausgebildet ist, dass bei einer Überdrehung der Lenkhandhabe (2) über den dem Software-Endanschlag zugeordneten Drehwinkel (ϕE) bei einer Richtungsumkehr des Drehwinkels (ϕD) ein angepasstes Übersetzungsverhältnis eingestellt wird, das durch den positiven Deltawert (pD) und den negativen Deltawert (-nD) begrenzt ist, wobei das angepasste Übersetzungsverhältnis derart gewählt wird, dass eine verbleibende Fehlstellung (ΔϕÜ-nD, ΔϕÜ+pD) der Lenkhandhabe (2) minimiert wird.

2. Steer-by-wire-Lenkung nach Anspruch 1, **dadurch gekennzeichnet, dass** der positive Deltawert (pD) und der negative Deltawert (-nD) betragsmäßig gleich sind.

3. Steer-by-wire-Lenkung nach Anspruch 1, **dadurch gekennzeichnet, dass** der positive Deltawert (pD) und der negative Deltawert (-nD) betragsmäßig unterschiedlich sind.

4. Steer-by-wire-Lenkung nach einem der Ansprüche 1 bis 3, **dadurch gekennzeichnet, dass** die steer-by-wire Lenkung derart ausgebildet ist, dass ganzzahlige Vielfache von 360° oder eines anderen Symmetriewinkels der Lenkhandhabe (2) eines über den dem Software-Endanschlag zugeordneten Drehwinkels (ϕE) eingeschlagenen Drehwinkels (ϕÜ - ϕE) ignoriert werden.

5. Verfahren zur Einstellung eines Lenkwinkels (ϕL) bei einer Steer-by-wire-lenkung (1), wobei die Steer-by-wire-Lenkung (1) eine Lenkhandhabe (2), einen Drehwinkelsensor (3) zur Erfassung einer Stellung der Lenkhandhabe (2), einen Aktor (4) zur Erzeugung eines Gegenmoments (M) an der Lenkhandhabe (2), einen Lenkaktor (5) zur Einstellung eines Lenkwinkels (ϕL) in Abhängigkeit der Daten (ϕD) des Drehwinkelsensors (3) an einem Stellglied (6) und das Stellglied (6) aufweist, wobei das Stellglied (6) einen mechanischen Endanschlag aufweist und der Aktor (4) an der Lenkhandhabe (2) einen Software-Endanschlag realisiert, wobei zwischen Drehwinkel (ϕD) an der Lenkhandhabe (2) und Lenkwinkel (ϕL) ein Übersetzungsverhältnis (Ü) eingestellt ist,
**dadurch gekennzeichnet, dass**
zu dem eingestellten Übersetzungsverhältnis (Ü) ein positiver Deltawert (pD) ungleich null und ein negativer Deltawert (-nD) ungleich null definiert sind, wobei bei einer Überdrehung der Lenkhandhabe (2) über den dem Software-Endanschlag zugeordneten Drehwinkel (ϕE) bei einer Richtungsumkehr des Drehwinkels (ϕD) ein angepasstes Übersetzungsverhältnis eingestellt wird, das durch den positiven Deltawert (pD) und den negativen Deltawert
(-nD) begrenzt wird, wobei das angepasste Übersetzungsverhältnis derart gewählt wird, dass eine verbleibende Fehlstellung (ΔϕÜ+pD; ΔϕÜ-nD) der Lenkhandhabe minimiert wird.

6. Verfahren nach Anspruch 5, **dadurch gekennzeichnet, dass** bei einem erneuten Lenkeinschlag und nachfolgender Richtungsumkehr das Übersetzungsverhältnis in mindestens einer Richtung angepasst wird, sodass die Fehlstellung weiter minimiert wird.

7. Verfahren nach einem der Ansprüche 5 oder 6, **dadurch gekennzeichnet, dass** der positive Deltawert (pD) und der negative Deltawert (-nD) betragsmäßig gleich gewählt werden.

8. Verfahren nach Anspruch 5 oder 6, **dadurch gekennzeichnet, dass** der positive Deltawert (pD) und der negative Deltawert (-nD) betragsmäßig unterschiedlich gewählt werden.

9. Verfahren nach einem der Ansprüche 5 bis 8, **dadurch gekennzeichnet, dass** ganzzahlige Vielfache von 360° oder eines anderen Symmetriewinkels der Lenkhandhabe (2) eines über den dem Software-Endanschlag zugeordneten Drehwinkels (ϕE) eingeschlagenen Drehwinkels (ϕÜ - ϕE) ignoriert werden.

## Claims

1. A steer-by-wire steering system (1), comprising a steering handle (2), a rotation angle sensor (3) for detecting a position of the steering handle (2), an actuator (4) for generating a counter-torque (M) on the steering handle (2), a steering actuator (5) for setting a steering angle (ϕL) as a function of the data (ϕD) of the rotation angle sensor (3) at a final control element (6), wherein the final control element (6) comprises a mechanical end stop and the actuator (4) realizes a software end stop at the steering handle (2), wherein a transmission ratio (U) is set between the rotation angle (ϕD) at the steering handle (2) and the steering angle (ϕL),
**characterized in that**
a positive delta value (pD) not equal to zero and a negative delta value (-nD) not equal to zero are defined with regard to the set transmission ratio (U), wherein the steer-by-wire steering system (1) is designed in such a way that, given an over-rotation of the steering handle (2) beyond the rotation angle (ϕE) associated with the software end stop during a reversal of direction of the rotation angle (ϕD), an adapted transmission ratio is set which is limited by the positive delta value (pD) and the negative delta value (-nD), wherein the adapted transmission ratio is selected in such a way that a remaining malposition (ΔϕÜ-nD, ΔϕÜ+pD) of the steering handle (2) is minimized.

2. The steer-by-wire steering system according to claim 1, **characterized in that** the positive delta value (pD) and the negative delta value (-nD) are equal in terms of magnitude.

3. The steer-by-wire steering system according to claim 1, **characterized in that** the positive delta value (pD) and the negative delta value (-nD) differ in terms of magnitude.

4. The steer-by-wire steering system according to one of claims 1 to 3, **characterized in that** the steer-by-wire steering system is designed in such a way that integer multiples of 360° or of another angle of symmetry of the steering handle (2) of a rotation angle (ϕÜ - ϕE) driven beyond the angle of rotation (ϕE) associated with the software end stop are ignored.

5. A method for setting a steering angle (ϕL) given a steer-by-wire steering system (1), wherein the steer-by-wire steering system (1) comprises a steering handle (2), a rotation angle sensor (3) for detecting a position of the steering handle (2), an actuator (4) for generating a counter-torque (M) at the steering handle (2), a steering actuator (5) for setting a steering angle (ϕL) as a function of the data (ϕD) of the rotation angle sensor (3) at a final control element (6), and the final control element (6), wherein the final control element (6) comprises a mechanical end stop and the actuator (4) realizes a software end stop at the steering handle (2), wherein a transmission ratio (U) is set between the rotation angle (ϕD) on the steering handle (2) and the steering angle (ϕL),
**characterized in that**
a positive delta value (pD) not equal to zero and a negative delta value (-nD) not equal to zero are defined for the set transmission ratio (Ü), wherein given an over-rotation of the steering handle (2) beyond the rotation angle (ϕE) associated with the software end stop during a reversal of direction of the rotation angle (ϕD), an adapted transmission ratio is set which is limited by the positive delta value (pD) and the negative delta value (-nD), wherein the adapted transmission ratio is selected in such a way that a remaining malposition (ΔϕÜ-nD; ΔϕÜ+pD) of the steering handle is minimized.

6. The method according to claim 5, **characterized in that** the transmission ratio is adapted in at least one direction, given a renewed turning of the steering wheel and a subsequent reversal of direction, so that the malposition is further minimized.

7. The method according to one of claims 5 or 6, **characterized in that** the positive delta value (pD) and the negative delta value (-nD) are selected to be equal in terms of magnitude.

8. The method according to claim 5 or 6, **characterized in that** the positive delta value (pD) and the negative delta value (-nD) are selected to be different in terms of magnitude.

9. The method according to one of claims 5 to 8, **characterized in that** integer multiples of 360° or of another angle of symmetry of the steering handle (2) of a rotation angle (ϕÜ - ϕE) driven beyond the angle of rotation (ϕE) associated with the software end stop are ignored.

## Revendications

1. Direction à commande électrique (1), comprenant une manette de direction (2), un capteur d'angle de rotation (3) pour la détermination d'une position de la manette de direction (2), un actionneur (4) pour la génération d'un couple antagoniste (M) au niveau de la manette de direction (2), un actionneur de braquage (5) pour le réglage d'un angle de braquage (ϕL) en fonction des données (ϕD) du capteur d'angle de rotation (3) au niveau d'un organe de réglage (6), l'organe de réglage (6) présentant alors une butée finale mécanique et l'actionneur (4) réalisant une butée finale logicielle au niveau de la manette de direction (2), un rapport de transmission (Ü) étant réglé entre l'angle de rotation (ϕD) de la manette de direction (2) et l'angle de braquage (ϕL),
**caractérisée en ce que**
une valeur delta positive (pD) non nulle et une valeur delta négative (-nD) non nulle sont définies pour le rapport de transmission (Ü) réglé, la direction à commande électrique (1) étant réalisée de telle façon que, dans le cas d'une rotation excessive de la manette de direction (2) au-delà de l'angle de rotation (ϕE) associé à la butée finale logicielle, un rapport de transmission adapté est réglé lors d'une inversion de la direction de l'angle de rotation (ϕD), lequel est limité par la valeur delta positive (pD) et la valeur delta négative (-nD), le rapport de transmission adapté étant choisi de telle façon qu'un défaut de position restant (ΔϕÜ-nD, ΔϕÜ+pD) de la manette de direction (2) est réduit au minimum.

2. Direction à commande électrique selon la revendication 1, **caractérisée en ce que** la valeur delta positive (pD) et la valeur delta négative (-nD) sont égales en valeur absolue.

3. Direction à commande électrique selon la revendication 1, **caractérisée en ce que** la valeur delta positive (pD) et la valeur delta négative (-nD) sont différentes en valeur absolue.

4. Direction à commande électrique selon l'une quelconque des revendications 1 à 3, **caractérisée en ce que** la direction à commande électrique est réalisée de telle façon que des multiples entiers de 360° ou d'un autre angle de symétrie de la manette de direction (2) d'un angle de rotation (ϕÜ - ϕE) braqué au-delà de l'angle de rotation (ϕE) associé à la butée finale logicielle sont ignorés.

5. Procédé pour le réglage d'un angle de braquage (ϕL) pour une direction à commande électrique (1), la direction à commande électrique (1) comprenant une manette de direction (2), un capteur d'angle de rotation (3) pour la détermination d'une position de la manette de direction (2), un actionneur (4) pour la génération d'un couple antagoniste (M) au niveau de la manette de direction (2), un actionneur de braquage (5) pour le réglage d'un angle de braquage (ϕL) en fonction des données (ϕD) du capteur d'angle de rotation (3) au niveau d'un organe de réglage (6) et l'organe de réglage (6), l'organe de réglage (6) présentant une butée finale mécanique et l'actionneur (4) réalisant une butée finale logicielle au niveau de la manette de direction (2), un rapport de transmission (Ü) étant réglé entre l'angle de rotation (ϕD) au niveau de la manette de direction (2) et l'angle de braquage (ϕL),
**caractérisé en ce que**
une valeur delta positive (pD) non nulle et une valeur delta négative (-nD) non nulle sont définies pour le rapport de transmission (Ü) réglé, où, dans le cas d'une rotation excessive de la manette de direction (2) au-delà de l'angle de rotation (ϕE) associé à la butée finale logicielle, un rapport de transmission adapté est réglé lors d'une inversion de la direction de l'angle de rotation (ϕD), lequel est limité par la valeur delta positive (pD) et la valeur delta négative (-nD), le rapport de transmission adapté étant choisi de telle façon qu'un défaut de position restant (ΔϕÜ-nD, ΔϕÜ+pD) de la manette de direction (2) est réduit au minimum.

6. Procédé selon la revendication 5, **caractérisé en ce que**, dans le cas d'un nouveau braquage et d'une inversion de direction ultérieure, le rapport de transmission est adapté dans au moins une direction, de telle sorte que le défaut de position est réduit d'avantage au minimum.

7. Procédé selon la revendication 5 ou 6, **caractérisé en ce que** la valeur delta positive (pD) et la valeur delta négative (-nD) sont choisies identiques en valeur absolue.

8. Procédé selon la revendication 5 ou 6, **caractérisé en ce que** la valeur delta positive (pD) et la valeur delta négative (-nD) sont choisies différentes en valeur absolue.

9. Procédé selon l'une quelconque des revendications 5 à 8, **caractérisé en ce que** des multiples entiers de 360° ou d'un autre angle de symétrie de la manette de direction (2) d'un angle de rotation (ϕÜ - ϕE) braqué au-delà de l'angle de rotation (ϕE) associé à la butée finale logicielle sont ignorés.
